(19) **Europäisches Patentamt / European Patent Office / Office européen des brevets**

(11) **EP 2 756 187 B1**

(12) **EUROPEAN PATENT SPECIFICATION**

(45) Date of publication and mention
of the grant of the patent:
**08.06.2016 Bulletin 2016/23**

(21) Application number: **12806193.4**

(22) Date of filing: **14.09.2012**

(51) Int Cl.:
*F03D 1/04* (2006.01)   *F03D 80/00* (2016.01)

(86) International application number:
**PCT/US2012/055420**

(87) International publication number:
**WO 2013/040361 (21.03.2013 Gazette 2013/12)**

(54) **FLUID TURBINE LIGHTNING PROTECTION SYSTEM**

BLITZSCHUTZSYSTEM FÜR EINE FLÜSSIGKEITSTURBINE

SYSTÈME DE PROTECTION CONTRE LA FOUDRE DE TURBINE À FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2011 US 201161534467 P**

(43) Date of publication of application:
**23.07.2014 Bulletin 2014/30**

(73) Proprietor: **Ogin, Inc.**
**Waltham, MA 02453 (US)**

(72) Inventors:
• **JENSEN, Rasmus, Peter**
  **DK-8883 Gjern (DK)**
• **HJORT, Soren**
  **DK-8600 Silkeborg (DK)**

(74) Representative: **Grey, Ian Michael et al**
**Venner Shipley LLP**
**200 Aldersgate**
**London EC1A 4HD (GB)**

(56) References cited:
**WO-A2-2010/005289    WO-A2-2011/072822**
**WO-A2-2011/090729**

• **GIUSEPPE PARISE ET AL: "Level, Class, and Prospected Safety Performance of a Lightning Protection System for a Complex of Structures (LPCS)", IEEE TRANSACTIONS ON INDUSTRY APPLICATIONS, IEEE SERVICE CENTER, PISCATAWAY, NJ, US, vol. 46, no. 5, 1 September 2010 (2010-09-01), pages 2106-2110, XP011315609, ISSN: 0093-9994**

**Description**

RELATED APPLICATIONS

This application claims priority under 35 U.S.C. § 119(e) to U.S. Provisional patent application no. 61/534,467 filed on September 14, 2011, the contents of which is hereby incorporated by reference in their entirety.

BACKGROUND

The present disclosure relates to the field of wind turbines and more particularly to the protection of shrouded turbines from lightning strikes. Utility scale wind turbines used for power generation may have one to five open blades comprising a rotor. The rotor transforms wind energy into a rotational torque that drives at least one generator rotationally coupled to the rotor, either directly or through a transmission assembly, to convert mechanical energy to electrical energy. Such turbines typically have long blades that are the most susceptible component of the wind turbine to lightning strikes. Wind turbines are required to be equipped with lightning protection systems in order to conduct large currents from lightning strikes to the ground without damaging the components of the turbine. Lightning strikes pose a threat to the blades, metallic rotational equipment, and electronic components. Increased density in wind farms poses additional threats from lightning strikes.

Blades comprised of weakly conductive material such as carbon fiber or other fiber reinforced polymers, experience high currents and therefore excessive heat when struck by lightning. External protective conductors, such as lightning rods, are impractical on a fast moving aerodynamic structure such as a blade. Alternatively, a protective mesh allows for a conductive layer without external conductors, however, the point of contact of a lightning strike will often damage the composite surface and provide a stress point where a crack can form.

Conventional wind turbine blades are typically engaged with bearing systems between the blades and a hub, a shaft and a nacelle, and between the nacelle and a tower. The blades are typically engaged with a bearing system at the root, and rotate about their long axis to alter the chord angle with respect to the wind direction for control of the rotor rotational speed with respect to the wind speed. In addition to this bearing system, the set of blades are further engaged with a hub that is connected to a shaft engaged with a bearing system within the generator. The shaft is rotationally engaged with the bearing system within the generator and drives the generator. The nacelle rotates about the support structure to yaw the turbine with respect to the wind direction and, for this reason, is engaged with a yaw bearing system between the nacelle and the tower. The bearing systems of the wind turbine as described above may provide a spark gap and can be damaged by high current passage. In this described example wind turbine, lightning striking the tip of a blade needs to be conducted through three bearing systems before reaching a direct connection to the ground.

Additionally, wind turbines may be equipped with meteorological equipment and sensitive electronic equipment that can be damaged by minor lightning strikes.

As the density of turbines in a wind farm increases, the potential for a single lightning strike to damage more than one turbine increases. Electrical installations, such as overhead lines, may provide protective conductors arranged around or above the installation. However, horizontal axis wind turbines having open blades present an obstacle to such protective conductors.

Document WO2010/005289 shows the closest prior art.

SUMMARY

The present disclosure relates to a shrouded fluid turbine lightning protection system, a shrouded fluid turbine system comprising a lightning protection system, and a method of protecting a shrouded fluid turbine from a lightning strike.

An example embodiment of a shrouded fluid turbine lightning protection system includes at least one air termination device that can be positioned on a shroud of a fluid turbine. The at least one air termination device is formed at least in part of an electrically conductive material and in electrical communication with a down conduction system. The down conduction system is in electrical communication with an earth-termination system that is configured to dissipate electricity transferred thereto to the ground. The at least one air termination device is configured to intercept a lightning strike and direct it through the down conduction system, the earth-termination system, and into the ground. The at least one air termination device may be positioned on a turbine shroud based on a "Rolling Sphere" method wherein the "Rolling Sphere" method is derived from the equation $r = 10 \cdot I^{0.65}$, where I is the peak current in kiloamperes and r is the rolling sphere radius in meters. The shrouded fluid turbine may include a turbine shroud, and the at least one air termination device may also be positionable on the turbine shroud. The shrouded fluid turbine may include an ejector shroud, and the at least one air termination device may also be positionable on the ejector shroud. An electrically conductive material may be integrated with the turbine shroud and/or the ejector shroud and electrically engaged with the down conductive system. The electrically conductive material may be positioned on a leading or trailing edge of the turbine shroud, a leading or trailing edge of the ejector shroud, or integrated with the surface of either the turbine shroud or the ejector shroud.

An example embodiment relates in general, to a shrouded fluid turbine comprising a ringed turbine shroud that surrounds a rotor, and at least one air termination device positioned on the shroud of the fluid turbine. The at least one air termination device is formed at least in part of an electrically conductive material and in electrical communication with a down conduction system. The down conduction system is in electrical communication with an earth-termination system that is configured to dissipate electricity transferred thereto to the ground. The at least one air termination device is configured to intercept a lightning strike and direct it through the down conduction system, the earth-termination system, and into the ground. The at least one air termination device may be positioned on a turbine shroud based on a "Rolling Sphere" method wherein the "Rolling Sphere" method is derived from the equation $r = 10 \cdot I^{0.65}$, where I is the peak current in kiloamperes and r is the rolling sphere radius in meters. This embodiment may further comprise an ejector shroud that surrounds the exit of the turbine shroud.

In one embodiment, the turbine shroud may comprise a set of mixing lobes along the trailing edge.

In one embodiment, the set of mixing lobes along the trailing edge are in fluid communication with the inlet of the ejector shroud. Together, the mixer lobes and the ejector shroud form a mixer-ejector pump that provides increased fluid velocity near the inlet of the turbine shroud, at the cross sectional area of the rotor plane. The mixer-ejector pump further provides a means of energizing the wake behind the rotor plane. The combination of the effects of the mixing lobes and the energized wake provide a rapidly-mixed, short wake when compared to non-shrouded horizontal axis wind turbines. The at least one air termination device may also be positionable on the ejector shroud. An electrically conductive material may be integrated with the turbine shroud and/or the ejector shroud and electrically engaged with the down conductive system.

The electrically conductive material may be positioned on a leading or trailing edge of the turbine shroud, a leading or trailing edge of the ejector shroud, or integrated with the surface of either the turbine shroud or the ejector shroud.

An example embodiment relates to a method of protecting a shrouded fluid turbine from a lightning strike. In the example method, a shrouded fluid turbine is provided and a peak lightning strike current is determined for the shrouded fluid turbine. A "Rolling Sphere" circumference is calculated based on the equation $r = 10 \cdot I^{0.65}$, where I is the peak current in kiloamperes and r is the rolling sphere radius in meters. One or more air termination devices are positioned on the shroud such that the calculated "Rolling Sphere" will contact the one or more air termination devices before contacting the shroud when the "Rolling Sphere" is rolled along an exterior of the shroud.

The present embodiment discloses a Primary Lightning Protection system (LPS) and a Secondary Lightning Protection System (LPS2). The LPS is intended to intercept and conduct lightning strikes of a range from approximately ≥25kA to ≤200 kA, safely from the air-termination system through the down conduction system to the earth-termination system. The corresponding rolling sphere system includes a range of radii from ≥81m to ≤313m. A secondary lightning protection system (LPS2) is comprised of materials integral to the shroud surfaces in combination with a down conduction system to the earth-termination system. The LPS2 is intended to intercept and conduct lightning strikes of a range from approximately ≥3kA to ≤10 kA usually in the form of static electricity. These charges correspond to a rolling sphere radius of 20m.

The turbine shroud and/or the ejector shroud provide a platform for an integrated lightning protection system resulting in a system with reduced complexity when compared to the lightning protection systems of horizontal axis wind turbines. The turbine shroud and/or the ejector shroud include few to no electrical components or mechanical moving parts, thus further reducing the risk of critical damage to the shrouded turbine.

BRIEF DESCRIPTION OF THE DRAWINGS

The following is a brief description of the drawings, which are presented for the purposes of illustrating the disclosure set forth herein and not for the purposes of limiting the same.

Figure 1 is a front, right, perspective view of an example embodiment of the present disclosure;
Figure 2 is a front, orthographic view of the example embodiment of Figure 1;
Figure 3 is a side, orthographic view of the example embodiment of Figure 1;
Figure 4 is a front, orthographic view of an example embodiment of the present disclosure;
Figure 5 is a side, orthographic view of the example embodiment of Figure 4;
Figure 6 is a front, orthographic view of an example embodiment of the present disclosure;
Figure 7 is a side, orthographic view of the example embodiment of Figure 6;
Figure 8 is a front, right, perspective, detail view of an example embodiment of the present disclosure;
Figure 9 is a right, perspective, detail view of the example embodiment of Figure 8;
Figure 10 is a front, right, perspective view of an example embodiment of the present disclosure;
Figure 11 is a front, orthographic view of the example embodiment of Figure 10; and

**Figure 12** is a side, orthographic view of the example embodiment of **Figure 10.**

DETAILED DESCRIPTION

A more complete understanding of the components, processes, and apparatuses disclosed herein can be obtained by reference to the accompanying figures. These figures are intended to demonstrate the present disclosure and are not intended to show relative sizes and dimensions or to limit the scope of the exemplary embodiments.

Although specific terms are used in the following description, these terms are intended to refer only to particular structures in the drawings and are not intended to limit the scope of the present disclosure. It is to be understood that like numeric designations refer to components of like function.

The term "about" when used with a quantity includes the stated value and also has the meaning dictated by the context. For example, it includes at least the degree of error associated with the measurement of the particular quantity. When used in the context of a range, the term "about" should also be considered as disclosing the range defined by the absolute values of the two endpoints. For example, the range "from about 2 to about 4" also discloses the range "from 2 to 4."

A Mixer-Ejector Turbine (MET) provides an improved means of generating power from fluid currents. The Mixer-Ejector Turbine includes tandem cambered shrouds and a mixer/ejector pump. The primary shroud contains a rotor, which extracts power from a primary fluid stream. The tandem cambered shrouds and ejector bring more flow through the rotor allowing more energy extraction due to higher flow rates. The mixer/ejector pump transfers energy from the bypass flow to the rotor wake flow allowing higher energy per unit mass flow rate through the rotor. These two effects enhance the overall power production of the turbine system.

A shrouded turbine provides an improved means of generating power from fluid currents. The shrouded turbine includes only a single shroud and does not include a mixer/ejector pump. The sole shroud contains a rotor, which extracts power from a primary fluid stream.

The term "rotor" is used herein to refer to any assembly in which one or more blades are attached to a shaft and able to rotate, allowing for the extraction of power or energy from fluid (wind or water) rotating the blades. Exemplary rotors include a propeller-like rotor or a rotor/stator assembly. Any type of rotor may be enclosed within the turbine shroud in the shrouded turbine of the present disclosure.

The leading edge of a turbine shroud may be considered the front of the fluid turbine, and the trailing edge the turbine shroud may be considered the rear of the fluid turbine. In embodiments with an ejector shroud, the trailing edge of the ejector shroud may be considered the rear of the fluid turbine. A first component of the fluid turbine located closer to the front of the turbine may be considered "upstream" of a second component located closer to the rear of the turbine. Put another way, the second component is "downstream" of the first component.

In one embodiment, the present disclosure relates to a shrouded fluid turbine that includes a turbine shroud that surrounds a rotor and an integrated lightning protection system that employs the structure and surfaces of the shroud. In some embodiments, the present disclosure relates to a shrouded fluid turbine that includes a turbine shroud that surrounds a rotor, an ejector shroud that surrounds the exit of the turbine shroud and an integrated lightning protection system that employs the structure and surfaces of the shrouds.

Various standards for lightning protection of wind turbines exist, and, as such, lightning protection systems typically employ a multi-faceted approach to the reduction of risk. An example external lightning protection system may consist of an air-termination system, a down conduction system, and an earth termination system. An air-termination system also known as a lightning rod, is a component of an external lightning protection system intended to intercept lightning flashes. A down conduction system is a conductor that is intended to conduct the lightning current from the air-termination system to the earth-termination system. An earth-termination system is a network of electrically interconnected rods, plates, mats, piping, grids, or other conductive components, installed below grade to establish a low resistance contact with the earth.

One method of determining the risk of direct lightning attachment is known as the "Rolling Sphere" method, in which an imaginary sphere is rolled about the surfaces of a 3D digital model of the wind turbine. The radius of the sphere is defined as:

$$r = 10 \cdot I^{0.65}$$

where r is the rolling sphere radius in meters [m] and **I** is the Peak Current in kiloamperes [kA]. For given rolling sphere radius r, it can be assumed that all lightning strikes with peak values higher than the corresponding current will be intercepted. As the imaginary sphere is rolled about the surfaces of the 3D digital model of the wind turbine, it is determined if the sphere is able to come in contact with the wind turbine prior to contacting an air termination system.

There is risk of direct lightning attachment to the turbine where the sphere is able to come in contact with the wind turbine prior to contacting an air termination system.

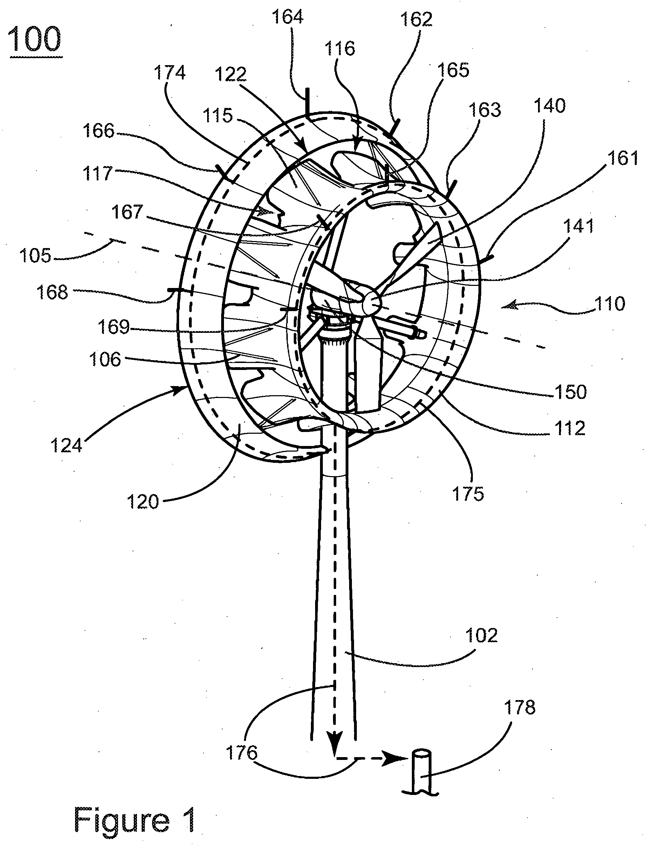

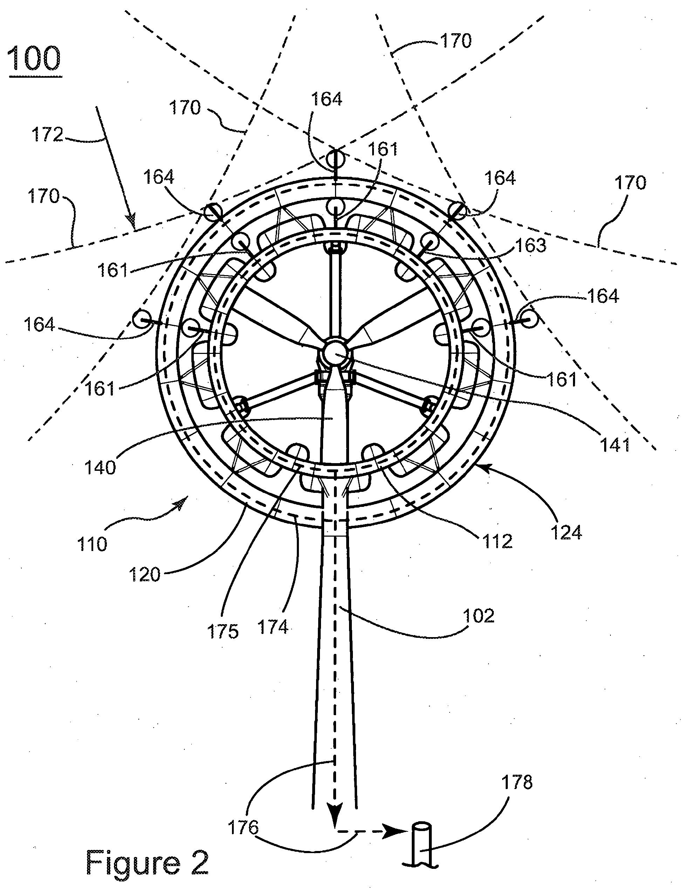

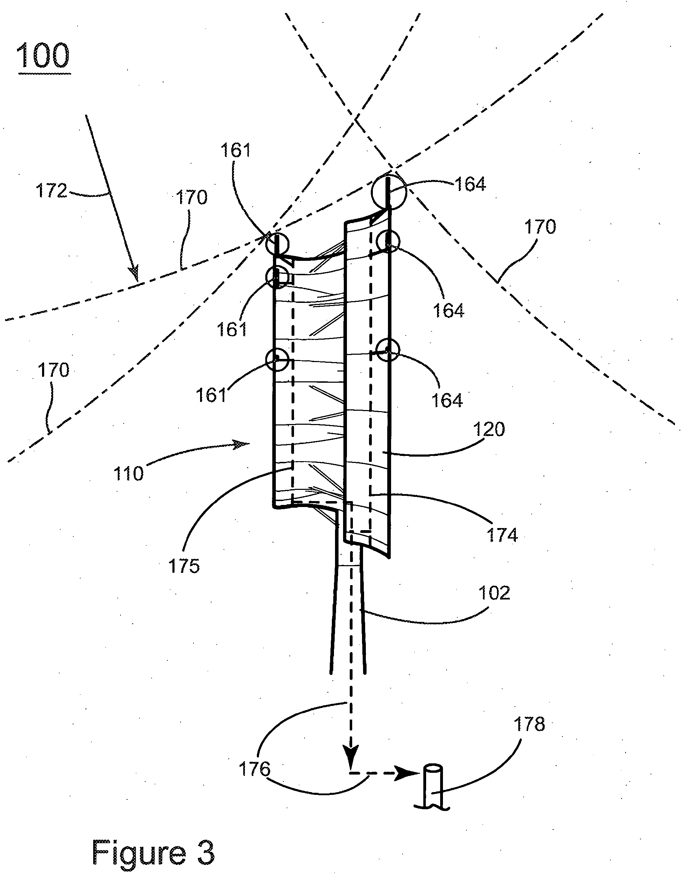

**Figures 1** through **9** depict example embodiments of a shrouded fluid turbine having two shrouds. **Figure 1** is a perspective view of an exemplary embodiment of a shrouded fluid turbine of the present disclosure. **Figure 2** is a front view of the fluid turbine of **Figure 1. Figure 3** is a side view of the fluid turbine of **Figure 1.** Referring to **Figure 1** through **Figure 3,** the shrouded fluid turbine **100** comprises a turbine shroud **110,** an ejector shroud **120,** a rotor **140,** and a nacelle body **150.** The turbine shroud **110** includes a front end **112,** also known as an inlet end or a leading edge, and a rear end or trailing edge **116,** also known as an exhaust end. The trailing edge **116** includes high energy lobes **117** and low energy lobes **115.** The depiction of the recited high energy lobes **117** and low energy lobes **115** is solely for illustrative purposes. One of ordinary skill in the art will readily recognize that the shape and orientation of the lobes may take numerous forms and the illustrated embodiment is not intended to be limiting in scope. The ejector shroud **120** includes a front end **122,** also known as an inlet end or leading edge, and a rear end or trailing edge **124,** also known as an exhaust end. Support members **106** connect the turbine shroud **110** to the ejector shroud **120.**

The rotor **140** surrounds the nacelle body **150** and comprises a central hub **141** at the proximal end of the rotor blades. The central hub **141** is rotationally engaged with the nacelle body **150.** The rotor **140,** turbine shroud **110,** and ejector shroud **120** are coaxial with each other, i.e., they share a common central axis **105.**

At least one air termination device **161,** between 1/80 to 1/20 the diameter of the ejector in length, is engaged with the turbine shroud **110.** Additionally, at least one air termination device **164** between 1m and 2m in length is also engaged with the ejector shroud **120.**

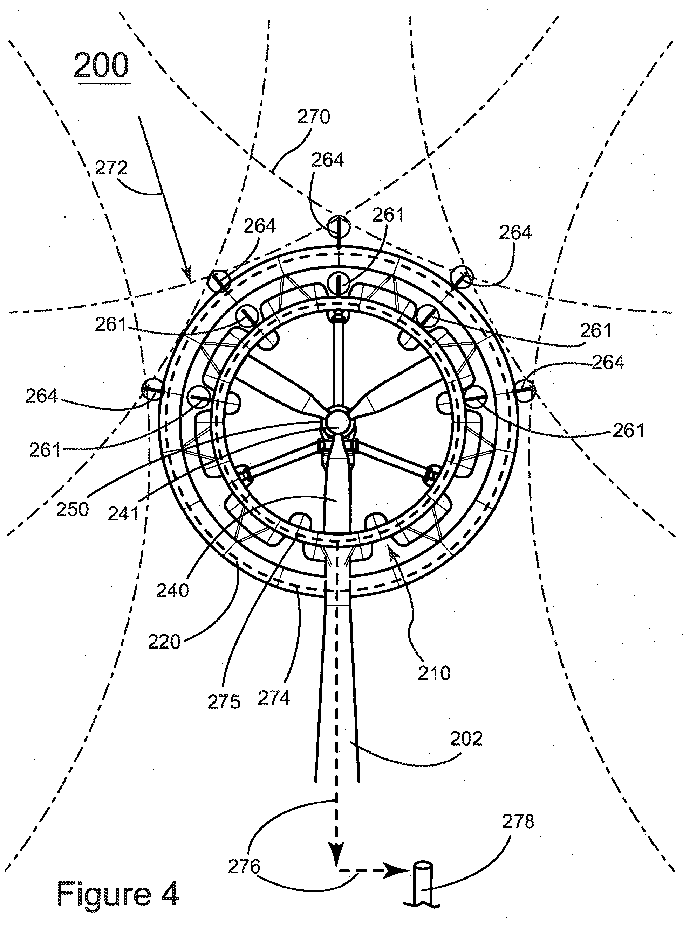

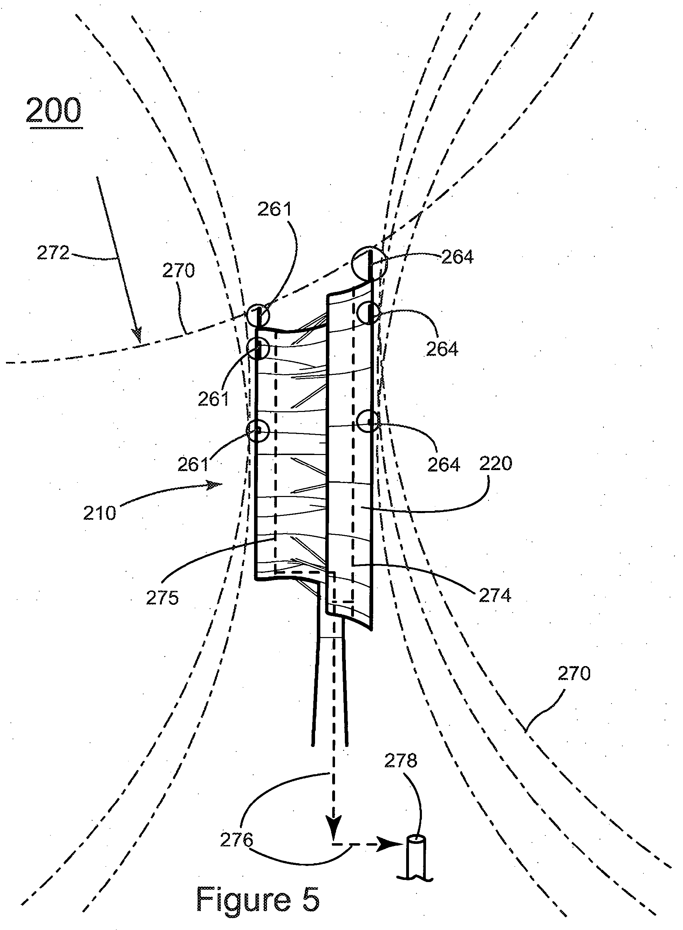

A Primary Lightning Protection system (LPS) is illustrated in **Figures 1** through **Figure 5. Figure 4** is a front view of an example embodiment, and **Figure 5** is a side view of the example embodiment of **Figure 4.**

**Figure 2** and **Figure 3** depict a rolling sphere radius in relation to the outer surface of the fluid turbine **100.** The rolling sphere circumference is illustrated by arc **170** and the radius is illustrated by arrow **172.** The rolling sphere arcs **170** have an approximate diameter of 313 meters, which corresponds to a lightning current of up to 200 kA. It can be seen in **Figures 2** and **3** that the arcs **170** do not come in contact with the body of the turbine shroud **110** or the ejector shroud **120** before coming in contact with at least one of the air termination devices **161/164.** It can be further seen in **Figures 2** and **3** that the arcs **170** do not come in contact with the rotor **140,** the hub **141,** or the nacelle **150** before coming in contact with at least one of the air termination devices **161/164.** The air termination devices **161/164** are in electrical communication with a down conduction system **176** by way of electrically coupled first and second conductors **174/175.** The down conduction system **176** transfers electricity to an earth-termination system **178** for dispersion of the electricity.

**Figure 4** and **Figure 5** depict a rolling sphere radius of approximately 80 meters, which corresponds to a lightning current in the range of approximately ≥25kA to ≤50 kA. The rolling sphere circumference is depicted by arcs **270** and the radius is depicted by arrow **272.** It can be seen in **Figure 4** and **Figure 5** that the rolling sphere has minimal contact with the turbine shroud **210** and the ejector shroud **220.** Simultaneous contact of the rolling sphere with either of the turbine shroud **210** or the ejector shroud **220** and at least one of the air termination devices **261/264** is possible. In such a situation, e.g., in the even of simultaneous contact, current is safely conducted to an earth-termination **278** system through the air termination devices **261/264** that are coupled with a down conduction system **276** by way of electrically coupled first and second conductors **274/275.** This provides for the conduction of the current without significant damage to the turbine shroud **210** or the ejector shroud **220,** due to the current range. It can be further seen in **Figure 4** and **Figure 5** that the arcs **270** do not come in contact with the rotor **240,** the hub **241,** or the nacelle **250** before coming in contact with at least one of the air termination devices **161/164.**

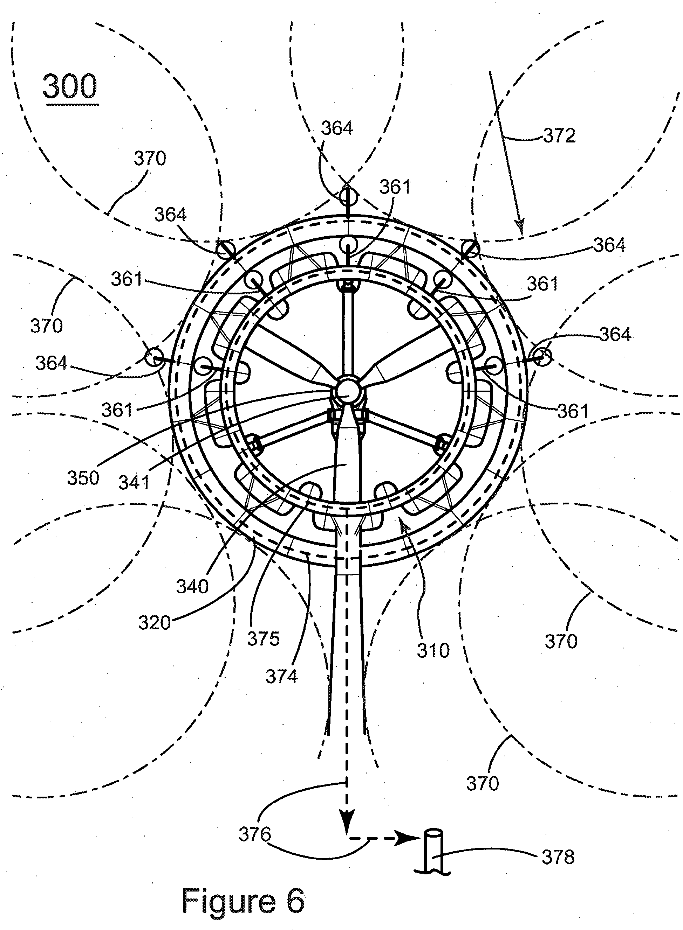

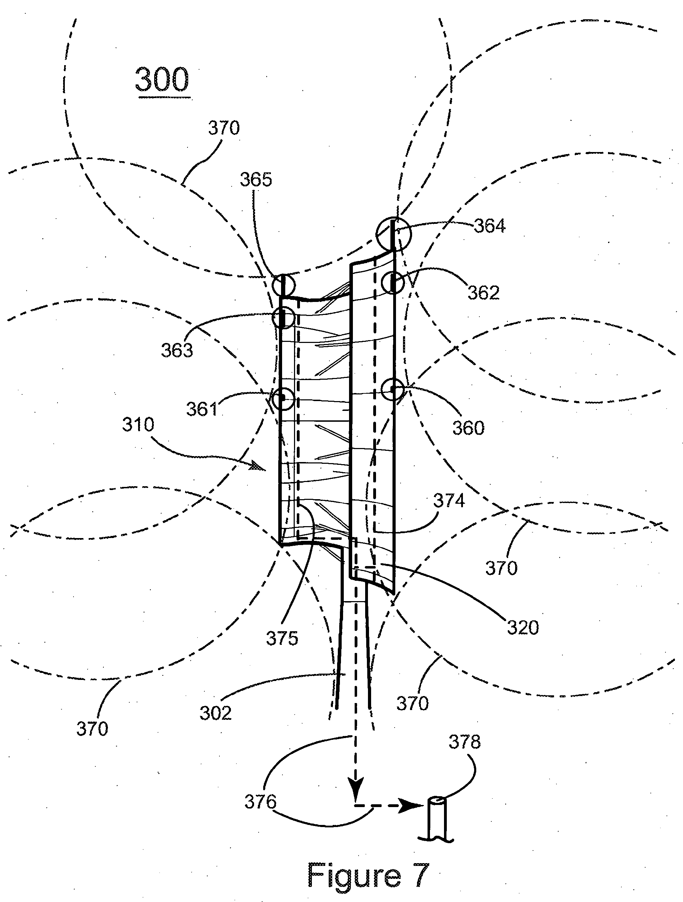

A secondary lightning protection system (LPS2) is illustrated in **Figure 6** and **Figure 7.** The LPS2 comprises electrically conductive materials integrated with the surfaces of a turbine shroud **310** and an ejector shroud **320.** The electrically conductive materials are connected with a down conduction system **376** by way of electrically coupled first and second conductors **374/375,** the down conduction system **376** is connected to an earth-termination system **378.** **Figure 6** and **Figure 7** depict a rolling sphere radius of approximately 20 meters, which corresponds to a lightning current in the range of approximately ≥3kA to ≤10 kA. The rolling sphere circumference is depicted by arcs **370** and the radius is depicted by arrow **372.** The LPS2 is intended to intercept and conduct lightning strikes of a range from approximately ≥3kA to ≤10 kA usually in the form of static electricity. Exposed hardware, for example, various metal fasteners (not shown) on the surface of the turbine shroud **310** and the ejector shroud **320** provide a sufficient means of dissipating a static charge prior to contact with the rotor **340,** the hub **341,** or the nacelle **350.**

In addition to the protection provided by the air termination devices, shroud surfaces with embedded or integrated materials provide additional lightning protection to rotating and electrical generation components.

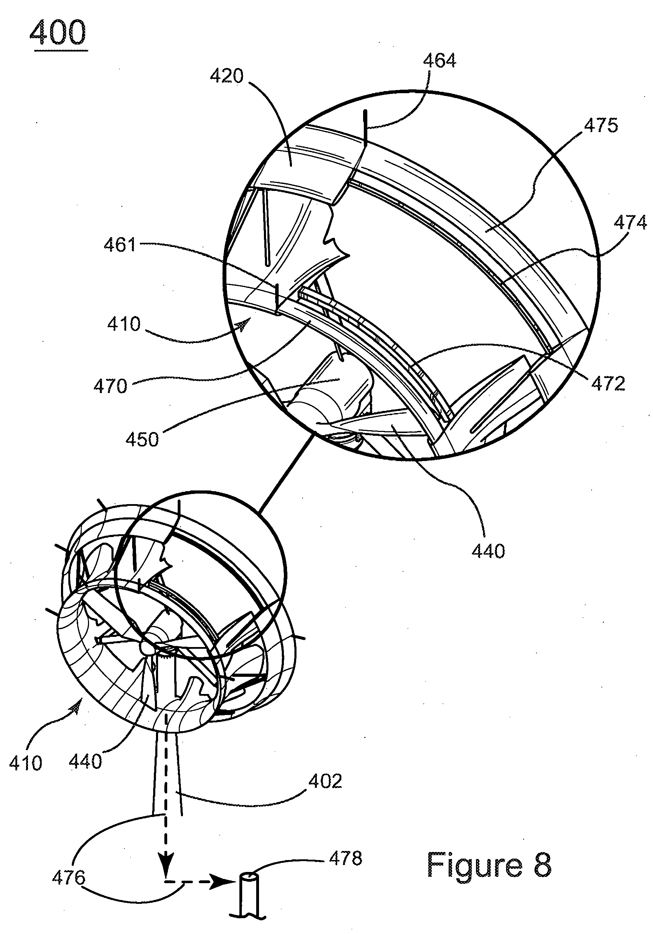

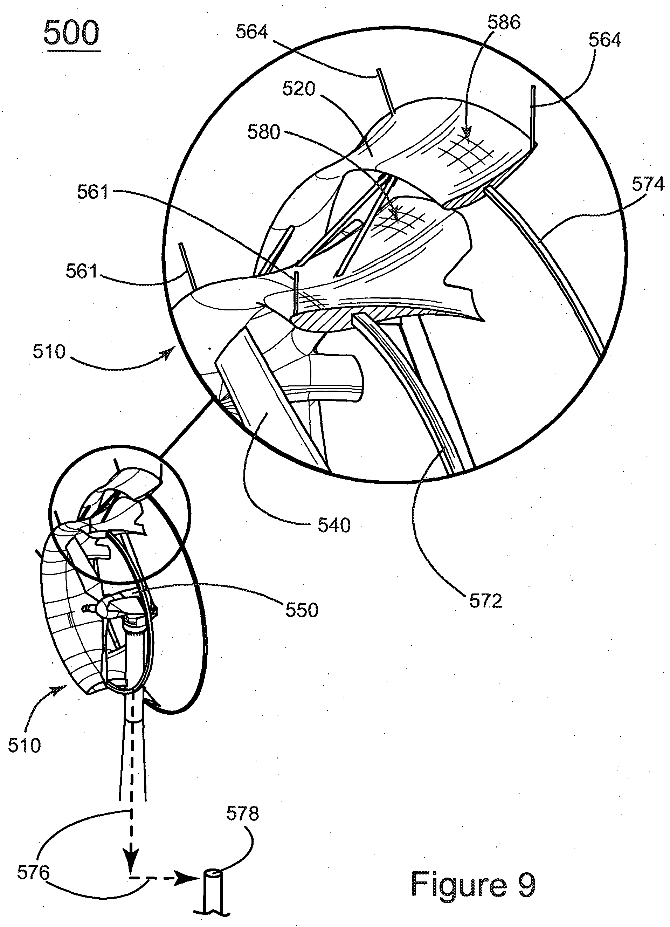

**Figure 8** and **Figure 9** illustrate an air-termination system integrated into the shroud surfaces. Referring to **Figure 8,** a mixer ejector turbine **400** comprises a turbine shroud **410** surrounding a rotor **440,** engaged with a hub **441** that is further engaged with a nacelle **450.** An ejector shroud **420** has an inner diameter greater that the outer diameter of the trailing edge of the turbine shroud **410** and the injector shroud **420** and the turbine shroud **410** are concentric to one another. In some embodiments the ejector shroud **420** surrounds the trailing edge of the turbine shroud **410**. In some embodiments the ejector shroud **420** is located downstream from the trailing edge of the turbine shroud **410**. A first electrically conductive material **470** is comprised of metalized polymers, fiber reinforced composites with electrically conductive fibers woven into the reinforcement, or composites with metallic characteristics such as those provided by nanoparticles made from graphite. The first electrically conductive material **470** is engaged with the leading edge of the turbine shroud **410** and further conductively engaged with an internal structure **472** of the turbine shroud **410** that is both electrically conductive and insulated. The internal structure **472** is further conductively engaged, through an electrical wiper system, as described below, with a down-conductive system **476** that is conductively engaged with an earth-termination system **478**. A second electrically conductive material **475** is engaged with the trailing edge of the ejector shroud **420** and is further conductively engaged with an internal structure **474** of the ejector shroud **420** that is further conductively engaged with the down-conductive system **476** that is conductively engaged with the earth-termination system **478**.

Electrical wiper systems, also known as slip rings, are commonly used to transfer electricity between stationary and rotating components and include conductive arms engaged with rotating disks. The conductive arms are often formed of metal such as brass or copper with a combination carbon and metallic substance at the distal ends. The distal ends engage with the rotating disks and provide rotational electrical connectivity.

Referring to **Figure 9**, a mixer ejector turbine **500** comprises a turbine shroud **510** that surrounds a rotor **540**, engaged with a hub **541** that is further engaged with a nacelle **550**. An ejector shroud **520** has an inner diameter greater than the outer diameter of the trailing edge of the turbine shroud **510**, and the ejector shroud **520** and the turbine shroud **510** are concentric with one another. In some embodiments the ejector shroud **520** surrounds the trailing edge of the turbine shroud **510**. In some embodiments the ejector shroud **520** is located downstream from the trailing edge of the turbine shroud **510**. A first electrically conductive material **580** is integrated into the surface of the turbine shroud **510** and further conductively engaged with an internal structure **572** of the turbine shroud that is conductively engaged **510** that is electrically conductive and insulated. The internal structure **527** is further conductively engaged with a down-conductive system **576** that is conductively engaged to an earth-termination system **578**. A second electrically conductive material **586** is integrated into the surface of the ejector shroud **520** and is further conductively engaged with an internal structure **574** of the ejector shroud **520** that is electrically conductive and insulated. The internal structure **574** is further conductively engaged with the down-conductive system **576** that is conductively engaged to the earth-termination system **578**.

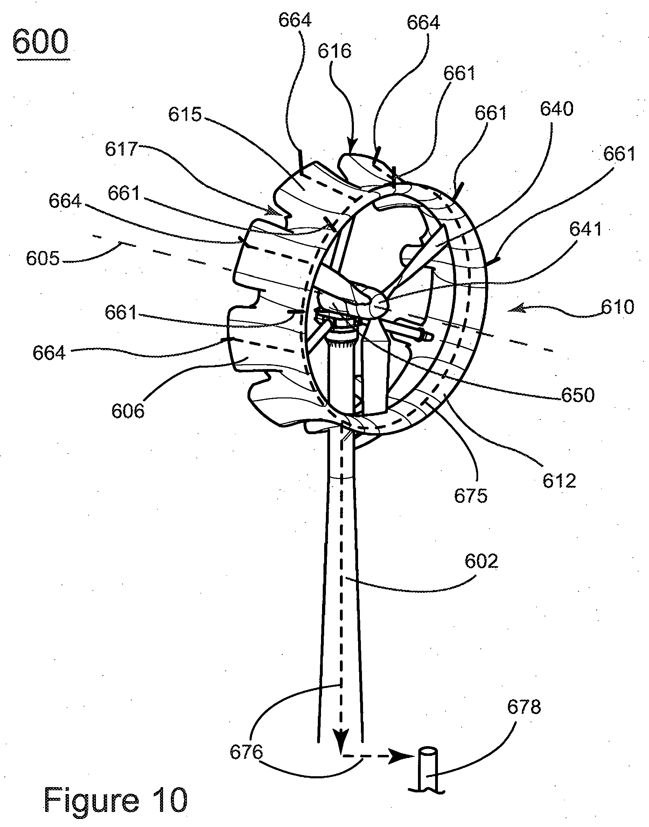

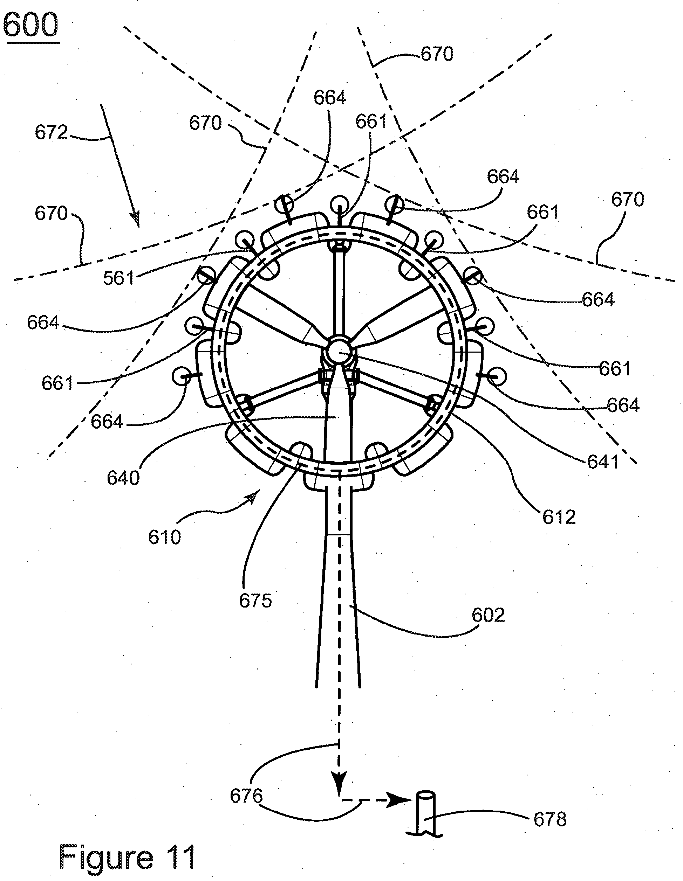

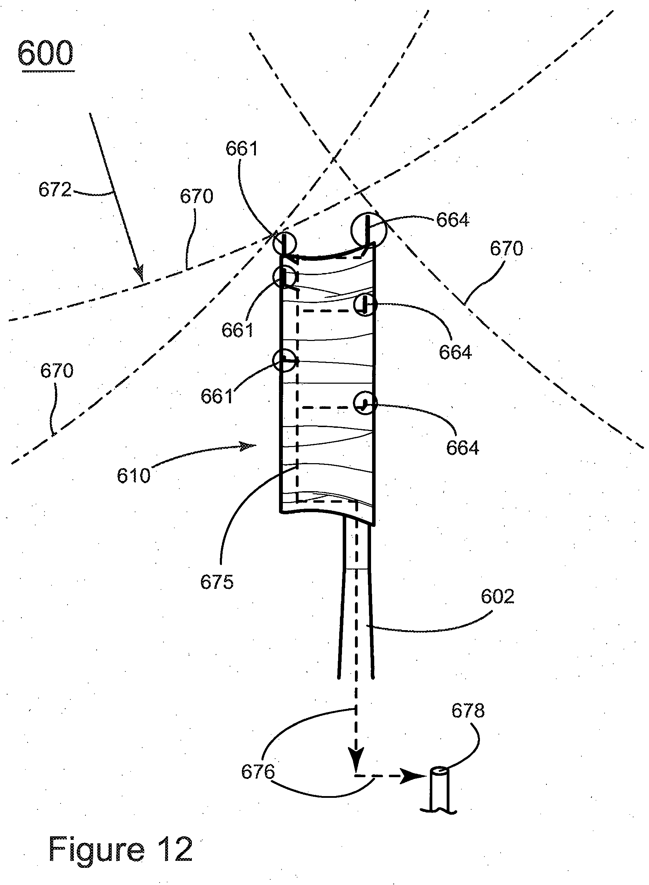

**Figures 10** through **12** depict example embodiments of a single shroud fluid turbine. **Figure 10 is** a perspective view of an exemplary embodiment of a single shroud fluid turbine of the present disclosure. **Figure 11** is a front view of the single shroud fluid turbine of **Figure 10. Figure 12** is a side view of the single shroud fluid turbine of **Figure 10.** Referring to **Figure 10** through **Figure 12,** the single shrouded fluid turbine **600** comprises a turbine shroud **610,** a rotor **640,** and a nacelle body **650**. The turbine shroud **610** includes a front end **612,** also known as an inlet end or a leading edge, and a rear end or trailing edge **616,** also known as an exhaust end. The trailing edge **616** includes high energy lobes **617** and low energy lobes **615.**

The rotor **640** surrounds the nacelle body **650** and includes a central hub **641** at the proximal end of the rotor blades. The central hub **641** is rotationally engaged with the nacelle body **650**. The rotor **640** and turbine shroud **610** are coaxial with each other, i.e., they share a common central axis **605.**

At least one air termination device **661,** between 1/80 to 1/20 the diameter of the turbine shroud **610** in length, is engaged with the leading edge **612** of the turbine shroud **610**. Additionally, at least one air termination device **664** between 1m and 2m in length is also engaged with the trailing edge **616** of the turbine shroud **610.**

A Primary Lightning Protection system (LPS) is illustrated in **Figures 10** through **Figure 12. Figure 11** is a front view of an example embodiment, and **Figure 12** is a side view of the example embodiment of **Figure 11.**

**Figure 11** and **Figure 12** depict a rolling sphere radius in relation to the outer surface of the fluid turbine **600**. The rolling sphere circumference is illustrated by arc **670** and the radius is illustrated by arrow **672**. The rolling sphere arcs **670** have an approximate diameter of 313 meters, which corresponds to a lightning current of up to 200 kA. It can be seen in **Figures 11** and **12** that the arcs **670 do** not come in contact with the body of the turbine shroud **610** before coming in contact with at least one of the air termination devices **661/664**. It can be further seen in **Figures 11** and **12** that the arcs **670** do not come in contact with the rotor **640**, the hub **641,** or the nacelle **650** before coming in contact with at least one of the air termination devices **661/664**. The air termination devices **661/664** are in electrical communication with a down conduction system **676** by way of an electrically coupled conductor **675**. The down conduction system **676** transfers electricity to an earth-termination system **678** for dispersion of the electricity.

Although a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

**Claims**

1.  A lightning protected fluid turbine, comprising:

    a fluid turbine (100, 200, 300, 400, 500, 600) including a shroud (110, 210, 310, 410, 510, 610);
    a plurality of air termination devices (161, 163, 165, 167, 169, 261, 361, 461, 561, 661) disposed about and positioned on the shroud of the fluid turbine, the plurality of air termination devices formed at least in part of an electrically conductive material;
    a down conduction system (176, 276, 376, 476, 576, 676) in electrical communication with the plurality of air termination devices; and
    an earth-termination system (178, 278, 378, 478, 578, 678) in electrical communication with the down conduction system, the earth-termination system configured to dissipate electricity to the ground,
    wherein the plurality of air termination devices are configured to intercept a lightning strike so as to prevent the lightning from striking the fluid turbine.

2.  The lightning protected fluid turbine of Claim 1, wherein the plurality of air termination devices are positioned on the shroud of the fluid turbine and configured to intercept a lightning strike based on a "Rolling Sphere" derivation.

3.  The lightning protected fluid turbine of Claim 2, wherein the "Rolling Sphere" derivation is derived from the equation $r = 10 \cdot I^{0.65}$, where I is defined as the peak current in kiloamperes and r is defined as the rolling sphere radius in meters.

4.  The lightning protected fluid turbine of Claim 1, wherein the fluid turbine includes an ejector shroud (120, 220, 320, 420, 520) and at least one of the plurality of air termination devices (162, 164, 166, 168, 264, 364, 464, 564) is positionable on the ejector shroud.

5.  The lightning protected fluid turbine of Claim 1, wherein the shroud of the fluid turbine further includes:

    an external electrically conductive material (470, 580); and
    an internal electrically conductive material (472, 572),

    wherein the external electrically conductive material is conductively engaged with the internal electrically conductive material, and the internal electrically conductive material is electrically engaged with the down conduction system.

6.  The lightning protected fluid turbine of Claim 5, wherein the internal electrically conductive material is in electrical communication with the down conductive system through an electrical wiper system.

7.  The lightning protected fluid turbine of Claim 5, wherein the external electrically conductive material is positioned at a leading edge of the shroud of the fluid turbine.

8.  The lightning protected fluid turbine of Claim 5, wherein the internal electrically conductive material is integrated with the surface of the shroud of the fluid turbine.

9.  The lightning protected fluid turbine of Claim 4, wherein the ejector shroud further includes:

    an external electrically conductive material (475, 586); and
    an internal electrically conductive material (474, 574),

    wherein the external electrically conductive material is conductively engaged with the internal electrically conductive material, and the internal electrically conductive material is electrically engaged with the down conduction system.

10. The lightning protected fluid turbine of Claim 9, wherein the internal electrically conductive material is in electrical communication with the down conductive system through an electrical wiper system.

11. The lightning protected fluid turbine of Claim 9, wherein the external electrically conductive material is positioned at a trailing edge of the ejector shroud.

12. The lightning protected fluid turbine of Claim 9, wherein the internal electrically conductive material is integrated with the surface of the ejector shroud.

**13.** A method of protecting a fluid turbine from a lightning strike, comprising:

providing a fluid turbine (100, 200, 300, 400, 500, 600) including a shroud (110, 210, 310, 410, 510, 610);
determining a peak lightning strike current;
calculating a "Rolling Sphere" circumference or radius (172, 272, 372, 672) based on the equation:

$$r = 10 \cdot I^{0.65}, \text{ where I is defined as the peak lightning strike current in kiloamperes}$$

where I is defined as the peak lightning strike current in kiloamperes and r is defined as the rolling sphere radius in meters; and
positioning a plurality of air termination devices (161, 163, 165, 167, 169, 261, 361, 461, 561, 661) on the shroud that are in electrical communication with a down conduction system (176, 276, 376, 476, 576, 676) that is in electrical communication with a earth-termination system (178, 278, 378, 478, 578, 678),
wherein the plurality of air termination devices are disposed about the shroud such that the calculated "Rolling Sphere" contacts one or more of the plurality of air termination devices before contacting the shroud when the "Rolling Sphere" is rolled along an exterior of the shroud.

**14.** The method of protecting a fluid turbine from a lightning strike of Claim 13, wherein the fluid turbine is provided with an ejector shroud (120, 220, 320, 420, 520) and one or more of the plurality of air termination devices (162, 164, 166, 168, 264, 364, 464, 564) are positioned on the ejector shroud.

**15.** The method of protecting a fluid turbine from a lightning strike of Claim 13, wherein the shroud includes an electrically conductive material (475, 586) integrated therein and in electrical communication with the down conduction system.

**16.** The method of protecting a fluid turbine from a lightning strike of Claim 15, wherein the electrically conductive material is positioned at a leading edge of the shroud.

**17.** The method of protecting a fluid turbine from a lightning strike of Claim 15, wherein the electrically conductive material is integrated with a surface of the shroud.


**Patentansprüche**

**1.** 1.Blitzgeschützte Flüssigkeitsturbine, die Folgendes beinhaltet:

eine Flüssigkeitsturbine (100, 200, 300, 400, 500, 600), die eine Verkleidung (110, 210, 310, 410, 510, 610) einschließt;
eine Vielzahl von Fangvorrichtungen (161, 163, 165, 167, 169, 261, 361, 461, 561, 661), die um die Verkleidung der Flüssigkeitsturbine herum angeordnet und auf dieser positioniert sind, wobei die Vielzahl von Fangvorrichtungen mindestens teilweise aus einem elektrisch leitfähigen Material gebildet sind;
ein Ableitsystem (176, 276, 376, 476, 576, 676) in elektrischer Kommunikation mit der Vielzahl von Fangvorrichtungen; und
ein Erdungssystem (178, 278, 378, 478, 578, 678) in elektrischer Kommunikation mit dem Ableitsystem, wobei das Erdungssystem konfiguriert ist, um Elektrizität zur Erde abzuleiten,
wobei die Vielzahl von Fangvorrichtungen konfiguriert sind, um einen Blitzschlag abzufangen, um so zu verhindern, dass der Blitz auf der Flüssigkeitsturbine einschlägt.

**2.** Blitzgeschützte Flüssigkeitsturbine gemäß Anspruch 1, wobei die Vielzahl von Fangvorrichtungen auf der Verkleidung der Flüssigkeitsturbine positioniert und konfiguriert sind, um einen Blitzschlag basierend auf einer "Blitzkugel"-Ableitung abzufangen.

**3.** Blitzgeschützte Flüssigkeitsturbine gemäß Anspruch 2, wobei die "Blitzkugel"-Ableitung von der Gleichung r = 10·I^{0,65} abgeleitet ist, wobei I als Spitzenstrom in Kiloampere definiert ist und r als Blitzkugelradius in Meter definiert ist.

**4.** Blitzgeschützte Flüssigkeitsturbine gemäß Anspruch 1, wobei die Flüssigkeitsturbine eine Ejektorverkleidung (120, 220, 320, 420, 520) einschließt und mindestens eine der Vielzahl von Fangvorrichtungen (162, 164, 166, 168, 264, 364, 464, 564) auf der Ejektorverkleidung positionierbar ist.

5. Blitzgeschützte Flüssigkeitsturbine gemäß Anspruch 1, wobei die Verkleidung der Flüssigkeitsturbine weiterhin Folgendes einschließt:

ein externes elektrisch leitfähiges Material (470, 580); und
ein internes elektrisch leitfähiges Material (472, 572),
wobei das externe elektrisch leitfähige Material mit dem internen elektrisch leitfähigen Material leitfähig im Eingriff steht und das interne elektrisch leitfähige Material mit dem Ableitsystem elektrisch im Eingriff steht.

6. Blitzgeschützte Flüssigkeitsturbine gemäß Anspruch 5, wobei das interne elektrisch leitfähige Material über ein elektrisches Schleifersystem in elektrischer Kommunikation mit dem Ableitsystem steht.

7. Blitzgeschützte Flüssigkeitsturbine gemäß Anspruch 5, wobei das externe elektrisch leitfähige Material an einer Vorderkante der Verkleidung der Flüssigkeitsturbine positioniert ist.

8. Blitzgeschützte Flüssigkeitsturbine gemäß Anspruch 5, wobei das interne elektrisch leitfähige Material in die Oberfläche der Verkleidung der Flüssigkeitsturbine integriert ist.

9. Blitzgeschützte Flüssigkeitsturbine gemäß Anspruch 4, wobei die Ejektorverkleidung weiterhin Folgendes einschließt:

ein externes elektrisch leitfähiges Material (475, 586); und
ein internes elektrisch leitfähiges Material (474, 574),
wobei das externe elektrisch leitfähige Material mit dem internen elektrisch leitfähigen Material leitfähig im Eingriff steht und das interne elektrisch leitfähige Material mit dem Ableitsystem elektrisch im Eingriff steht.

10. Blitzgeschützte Flüssigkeitsturbine gemäß Anspruch 9, wobei das interne elektrisch leitfähige Material über ein elektrisches Schleifersystem in elektrischer Kommunikation mit dem Ableitsystem steht.

11. Blitzgeschützte Flüssigkeitsturbine gemäß Anspruch 9, wobei das externe elektrisch leitfähige Material an einer Hinterkante der Ejektorverkleidung positioniert ist.

12. Blitzgeschützte Flüssigkeitsturbine gemäß Anspruch 9, wobei das interne elektrisch leitfähige Material in die Oberfläche der Ejektorverkleidung integriert ist.

13. Verfahren zum Schützen einer Flüssigkeitsturbine vor einem Blitzschlag, das Folgendes beinhaltet:

Bereitstellen einer Flüssigkeitsturbine (100, 200, 300, 400, 500, 600), die eine Verkleidung (110, 210, 310, 410, 510, 610) einschließt;
Bestimmen eines Spitzenblitzschlagstroms;
Berechnen eines "Blitzkugel"-Umfangs oder Radius (172, 272, 372, 672) basierend auf der Gleichung:

$$r = 10 \cdot I^{0,65}, \text{ wobei I als Spitzenblitzschlagstrom}$$

wobei I als Spitzenblitzschlagstrom in Kiloampere definiert ist und r als Blitzkugelradius in Meter definiert ist; und
Positionieren einer Vielzahl von Fangvorrichtungen (161, 163, 165, 167, 169, 261, 361, 461, 561, 661) auf der Verkleidung, die mit einem Ableitsystem (176, 276, 376, 476, 576, 676) in elektrischer Kommunikation stehen, das mit einem Erdungssystem (178, 278, 378, 478, 578, 678) in elektrischer Kommunikation steht,
wobei die Vielzahl von Fangvorrichtungen um die Verkleidung herum so angeordnet sind, dass die berechnete "Blitzkugel" eine oder mehrere der Vielzahl von Fangvorrichtungen kontaktiert, bevor die Verkleidung kontaktiert wird, wenn die "Blitzkugel" entlang einer Außenseite der Verkleidung gerollt wird.

14. Verfahren zum Schützen einer Flüssigkeitsturbine vor einem Blitzschlag gemäß Anspruch 13, wobei die Flüssigkeitsturbine mit einer Ejektorverkleidung (120, 220, 320, 420, 520) versehen ist und eine oder mehrere der Vielzahl von Fangvorrichtungen (162, 164, 166, 168, 264, 364, 464, 564) auf der Ejektorverkleidung positioniert sind.

**15.** Verfahren zum Schützen einer Flüssigkeitsturbine vor einem Blitzschlag gemäß Anspruch 13, wobei die Verkleidung ein elektrisch leitfähiges Material (475, 586) einschließt, das darin integriert ist und in elektrischer Kommunikation mit dem Ableitsystem steht.

**16.** Verfahren zum Schützen einer Flüssigkeitsturbine vor einem Blitzschlag gemäß Anspruch 15, wobei das elektrisch leitfähige Material an einer Vorderkante der Verkleidung positioniert ist.

**17.** Verfahren zum Schützen einer Flüssigkeitsturbine vor einem Blitzschlag gemäß Anspruch 15, wobei das elektrisch leitfähige Material in eine Oberfläche der Verkleidung integriert ist.


**Revendications**

**1.** Turbine à fluide protégée contre la foudre, comprenant :

une turbine à fluide (100, 200, 300, 400, 500, 600) comportant un carénage (110, 210, 310, 410, 510, 610) ;
une pluralité de dispositifs de terminaison dans l'air (161, 163, 165, 167, 169, 261, 361, 461, 561, 661) disposés autour de, et positionnés sur, le carénage de la turbine à fluide, la pluralité de dispositifs de terminaison dans l'air étant formée au moins en partie d'un matériau électriquement conducteur ;
un système de conduction vers le bas (176, 276, 376, 476, 576, 676) en liaison électrique avec la pluralité de dispositifs de terminaison dans l'air ; et
un système de mise à la terre (178, 278, 378, 478, 578, 678) en liaison électrique avec le système de conduction vers le bas, le système de mise à la terre étant configuré pour dissiper l'électricité dans le sol,
dans laquelle la pluralité de dispositifs de terminaison dans l'air est configurée pour intercepter un choc de foudre de façon à empêcher la foudre de frapper la turbine à fluide.

**2.** Turbine à fluide protégée contre la foudre selon la revendication 1, dans laquelle la pluralité de dispositifs de terminaison dans l'air est positionnée sur le carénage de la turbine à fluide et configurée pour intercepter un choc de foudre par dérivation selon le modèle de la "sphère roulante".

**3.** Turbine à fluide protégée contre la foudre selon la revendication 2, dans laquelle la dérivation selon le modèle de la "sphère roulante" est tirée de l'équation $r = 10 \cdot I^{0,65}$, où I est le courant de crête en kiloampères et r est le rayon de la sphère roulante en mètres.

**4.** Turbine à fluide protégée contre la foudre selon la revendication 1, dans laquelle la turbine à fluide comporte un carénage d'éjecteur (120, 220, 320, 420, 520) et un dispositif au moins de la pluralité de dispositifs de terminaison dans l'air (162, 164, 166, 168, 264, 364, 464, 564) peut être positionné sur le carénage d'éjecteur.

**5.** Turbine à fluide protégée contre la foudre selon la revendication 1, dans laquelle le carénage de la turbine à fluide comporte en outre :

un matériau électriquement conducteur extérieur (470, 580) ; et
un matériau électriquement conducteur intérieur (472, 572),
le matériau électriquement conducteur extérieur étant en prise conductrice avec le matériau électriquement conducteur intérieur et le matériau électriquement conducteur intérieur étant en prise électrique avec le système de conduction vers le bas.

**6.** Turbine à fluide protégée contre la foudre selon la revendication 5, dans laquelle le matériau électriquement conducteur intérieur est en liaison électrique avec le système de conduction vers le bas par le biais d'un système de frotteur électrique.

**7.** Turbine à fluide protégée contre la foudre selon la revendication 5, dans laquelle le matériau électriquement conducteur extérieur est positionné au niveau d'un bord d'attaque du carénage de la turbine à fluide.

**8.** Turbine à fluide protégée contre la foudre selon la revendication 5, dans laquelle le matériau électriquement conducteur intérieur fait partie intégrante de la surface du carénage de la turbine à fluide.

**9.** Turbine à fluide protégée contre la foudre selon la revendication 4, dans laquelle le carénage d'éjecteur comporte en outre :

un matériau électriquement conducteur extérieur (475, 586) ; et
un matériau électriquement conducteur intérieur (474, 574),
le matériau électriquement conducteur extérieur étant en prise conductrice avec le matériau électriquement conducteur intérieur et le matériau électriquement conducteur intérieur étant en prise électrique avec le système de conduction vers le bas.

10. Turbine à fluide protégée contre la foudre selon la revendication 9, dans laquelle le matériau électriquement conducteur intérieur est en liaison électrique avec le système de conduction vers le bas par le biais d'un système de frotteur électrique.

11. Turbine à fluide protégée contre la foudre selon la revendication 9, dans laquelle le matériau électriquement conducteur extérieur est positionné au niveau d'un bord de fuite du carénage d'éjecteur.

12. Turbine à fluide protégée contre la foudre selon la revendication 9, dans laquelle le matériau électriquement conducteur intérieur fait partie intégrante de la surface du carénage d'éjecteur.

13. Méthode de protection d'une turbine à fluide contre un choc de foudre, comprenant les étapes consistant à :

prédisposer une turbine à fluide (100, 200, 300, 400, 500, 600) comportant un carénage (110, 210, 310, 410, 510, 610) ;
déterminer un courant de crête de choc de foudre ;
calculer la circonférence ou le rayon (172, 272, 372, 672) d'une "sphère roulante" au moyen de l'équation :

$$r = 10 \cdot I^{0,65}, \text{ où I est le courant de crête de choc de}$$

où I est le courant de crête de choc de foudre en kiloampères et r est le rayon de la sphère roulante en mètres ; et
positionner sur le carénage une pluralité de dispositifs de terminaison dans l'air (161, 163, 165, 167, 169, 261, 361, 461, 561, 661) qui sont en liaison électrique avec un système de conduction vers le bas (176, 276, 376, 476, 576, 676) qui est en liaison électrique avec un système de mise à la terre (178, 278, 378, 478, 578, 678), la pluralité de dispositifs de terminaison dans l'air étant disposée autour du carénage de telle façon que la "sphère roulante" calculée entre en contact avec un ou plusieurs dispositifs de la pluralité de dispositifs de terminaison dans l'air avant de venir en contact avec le carénage lorsque la "sphère roulante" roule le long d'un extérieur du carénage.

14. Méthode de protection d'une turbine à fluide contre un choc de foudre selon la revendication 13, dans laquelle la turbine à fluide est pourvue d'un carénage d'éjecteur (120, 220, 320, 420, 520) et un ou plusieurs dispositifs de la pluralité de dispositifs de terminaison dans l'air (162, 164, 166, 168, 264, 364, 464, 564) sont positionnés sur le carénage d'éjecteur.

15. Méthode de protection d'une turbine à fluide contre un choc de foudre selon la revendication 13, dans laquelle le carénage comporte un matériau électriquement conducteur (475, 586) qui est intégré dans ledit carénage et en liaison électrique avec le système de conduction vers le bas.

16. Méthode de protection d'une turbine à fluide contre un choc de foudre selon la revendication 15, dans laquelle le matériau électriquement conducteur est positionné au niveau d'un bord d'attaque du carénage.

17. Méthode de protection d'une turbine à fluide contre un choc de foudre selon la revendication 15, dans laquelle le matériau électriquement conducteur fait partie intégrante d'une surface du carénage.

100

Figure 1

Figure 2

Figure 3

200

270

272

264

264

261

264

261

261

264

261

261

250   241

240

220

275   274

210

202

276

278

Figure 4

Figure 5

Figure 6

EP 2 756 187 B1

Figure 7

18

## 400

Figure 8

500

564

586

564

520

580

574

561

561

510

540

572

550

510

578

576

578

Figure 9

Figure 10

Figure 11

600

672
670
661
664
670
661
661
664
670
664
610
675
602
676
678

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61534467 A
- WO 2010005289 A